# EUROPÄISCHE PATENTSCHRIFT

(11) **EP 1 311 747 B1**
(45) Veröffentlichungstag und Bekanntmachung des Hinweises auf die Patenterteilung: **24.03.2004**
(21) Anmeldenummer: 01955285.0
(22) Anmeldetag: 18.05.2001
(51) Int. Cl.: F01N 11/00, F02D 41/14

(54) **ABGASREINIGUNGSSYSTEM MIT VERZÖGERTER MESSWERTERFASSUNG**
EXHAUST-GAS PURIFICATION SYSTEM COMPRISING A DEFERRED MEASURED VALUE RECORDING
SYSTEME D'EPURATION DE GAZ D'ECHAPPEMENT AVEC RELEVE DIFFERE DES VALEURS DE MESURE

(30) Priorität: 02.06.2000 DE 10027410
(43) Veröffentlichungstag der Anmeldung: 21.05.2003
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); MAUS, Wolfgang, 51429 Bergisch Gladbach (DE)
(74) Vertreter: Kahlhöfer, Hermann, Dipl.-Phys.
(86) Internationale Anmeldenummer: PCT/EP2001/005689
(87) Internationale Veröffentlichungsnummer: WO 2001/092697

(56) Entgegenhaltungen:
- FR-A- 2 773 847
- US-A- 5 351 526
- US-A- 5 385 016
- US-A- 5 894 727
- PATENT ABSTRACTS OF JAPAN vol. 014, no. 129 (P-1020), 12. März 1990 (1990-03-12) & JP 01 321370 A (NISSAN MOTOR CO LTD), 27. Dezember 1989 (1989-12-27)
- PATENT ABSTRACTS OF JAPAN vol. 2000, no. 01, 31. Januar 2000 (2000-01-31) & JP 11 294149 A (MITSUBISHI MOTORS CORP), 26. Oktober 1999 (1999-10-26)

## Beschreibung

Die Erfindung bezieht sich auf ein Abgassystem zum Reinigen eines Abgases mit einer Abgasleitung, welche das Abgas von einer Verbrennungsmaschine stromabwärts in die Umgebung führt. Die Abgasleitung weist einen Sensor auf, um die Schadstoffkonzentration an einer ersten Stelle zu bestimmen. Derartige Abgassysteme werden insbesondere im Automobilbau eingesetzt.

Aufgrund immer strenger werdender Abgasrichtlinien und -gesetze, welche eine letztendlich in die Umgebung abgegebene Schadstoffkonzentration im Abgas beschränken, gewinnt die Überwachung des Abgassystems zunehmend an Bedeutung. Zu diesem Zweck werden vielfach Sensoren eingesetzt, welche beispielsweise die Funktionalität von Komponenten zur Umsetzung der Schadstoffe im Abgas überwachen oder deren erfaßte Meßwerte direkt an eine Motorsteuerung weitergeleitet werden, welche die empfangenen Meßdaten bei der Steuerung des Betriebsverhaltens der Verbrennungsmaschine berücksichtigt. Neben der Temperatur und dem Druck des Abgases im Abgassystem werden ebenfalls die Konzentrationen unterschiedlicher Schadstoffe im Abgas gemessen. Solche Schadstoffe sind beispielsweise verschiedene Kohlenwasserstoffe oder Stickoxide. Gassensoren, insbesondere zur Bestimmung der Konzentration von Kohlenwasserstoffen und Stickoxiden im Abgas, sind besonders temperatur- und druckempflindlich, wodurch ihre Einsetzbarkeit in einem Abgassystem beschränkt wird.

Bekannt ist, die erfaßten Meßwerte an eine Diagnose-Einheit weiterzuleiten, um den Betrieb des Abgassystems sowie die Funktionalität der Sensoren zu überwachen vgl. z.B. Patentschrift US 5,385,016 A. Die empfangenen Daten werden beispielsweise mit gespeicherten Informationen verglichen. Werden von der Diagnose-Einheit Fehlfunktionen identifiziert, werden diese entweder aufgezeigt oder es werden mit einer geeigneten Motorsteuerung die Ursache der Fehlfunktion erkannt und mit entsprechenden Maßnahmen entgegengewirkt.

Aufgabe der vorliegenden Erfindung ist es, eine Überwachung des Abgassystems auch mit temperatur- oder druckempfindlichen Sensoren zu gewährleisten, wobei die erfaßten Meßwerte korrelierend zu anderen Meßwerten an eine Motorsteuerung weitergeleitet werden.

Diese Aufgabe wird erfindungsgemäß durch ein Abgassystem zum Reinigen eines Abgases gemäß Anspruch 1 sowie ein Verfahren zur Bestimmung der Schadstoffkonzentration gemäß Anspruch 12 gelöst. Vorteilhafte Weiterbildungen und Ausgestaltungen sind Gegenstand der abhängigen Ansprüche.

Das erfindungsgemäße Abgassystem zum Reinigen eines Abgases weist eine Abgasleitung auf, welche das Abgas von einer Verbrennungsmaschine stromabwärts in die Umgebung führt. Weiterhin weist die Abgasleitung einen Sensor auf, um die Schadstoffkonzentration an einer ersten Stelle zu bestimmen. Das Abgassystem zeichnet sich dadurch aus, daß der Sensor selbst an einer zweiten Stelle angeordnet und mit einem Zeitglied verbunden ist, welches die Zeitdifferenz zwischen einer Meßwerterfassung an der ersten und der zweiten Stelle berücksichtigt. Auf diese Weise wird der erfaßte Meßwert so an eine Diagnose-Einheit weitergeleitet, daß dieser korrelierend mit anderen, nicht verzögerten Meßwerten verarbeitet werden kann.

Wie bereits in der Beschreibungseinleitung erläutert, sind bekannte Sensoren nicht beliebig in einem Abgassystem einsetzbar. Dies macht es gegebenenfalls notwendig, die temperatur- und druckempfindlichen Sensoren an Stellen des Abgassystems zu positionieren, die von dem gewünschten Meßpunkt entfernt sind. Die Lebensdauer der Sensoren kann dadurch erhöht werden.

In den meisten Fällen werden die von den Sensoren erfaßten Meßwerte an eine übergeordnete Diagnose-Einheit weitergeleitet. In dieser Diagnose-Einheit werden die Meßwerte auch analysiert. Um zu einem aussagekräftigen Ergebnis zu gelangen, werden vielfach mehrere Meßwerte miteinander in Beziehung gesetzt. Daher ist es besonders wichtig, daß die entsprechenden Meßwerte zueinander zeitlich korrelieren.

Da der Sensor an der zweiten Stelle die Schadstoffkonzentration zu einem anderen Zeitpunkt erfaßt als die Meßwerte, welche mit der erfaßten Schadstoffkonzentration in Beziehung gesetzt werden, wird die Zeitdifferenz zwischen einer imaginären Meßwerterfassung an der ersten Stelle und der tatsächlich stattgefundenen an der zweiten Stelle mit Hilfe eines Zeitgliedes berücksichtigt. Die Zeitdifferenz ist nicht konstant, da die Strömungsgeschwindigkeit des Abgases in dem Abgassystem in Abhängigkeit vom Fahrbetriebszustand variiert. Das Zeitglied stellt sicher, daß in der Diagnose-Einheit die korrekten, zeitlich korrelierenden Meßwerte miteinander in Beziehung gesetzt werden.

Gemäß einer weiteren Ausführungsform ist der Sensor zur Bestimmung der Schadstoffkonzentration ein Gassensor. Diese Sensoren sind besonders temperatur- und druckempfindlich. Somit ist der Einsatz eines Gassensors in motornaher Umgebung sowie direkt hinter einem Katalysator, wo Temperaturen von 900°C bis 1000°C herrschen, problematisch. Die Kombination eines Sensors mit einem Zeitglied sichert die Funktionalität des Sensors über einen langen Zeitraum und ermöglicht gleichzeitig eine Auswertung der Meßwerte mit anderen Meßwerten des Abgassystems.

Besonders vorteilhaft ist es, wenn der Sensor für die Erfassung der Stickoxid-Konzentration im Abgas geeignet ist. Insbesondere steht dabei die Stickstoffmonoxid-Konzentration im Vordergrund, da dieser Schadstoff gerade in der Kaltstartphase nur schwer umsetzbar ist und gegebenenfalls das Betriebsverhalten der Verbrennungsmaschine angepaßt werden muß.

Gemäß einer weiteren Ausgestaltung des Abgassystems ist der Sensor für die Erfassung der Kohlenwasserstoff-Konzentration geeignet. Dies ermöglicht beispielsweise eine Beurteilung des Betriebsverhaltens der Verbrennungsmaschine, da die Konzentration von unverbrannten oder nur teilweise verbrannten Kohlenwasserstoffen ein Maßstab für die Güte der Verbrennungsvorgäne ist.

Gemäß einem weiteren Ausführungsbeispiel weist das Abgassystem mindestens eine Komponente zur mindestens teilweisen Umsetzung der Schadstoffe auf. Besonders vorteilhaft ist es, mindestens eine Komponente als Katalysator auszuführen. Der Katalysator reinigt das Abgas beispielsweise von durch unvollständige Verbrennung des Kraftstoffes enthaltenden Kohlenmonoxiden und Stickoxiden. Der Katalysator fördert eine Reaktion von Stickoxid mit Kohlenmonoxid zu molekularem Stickstoff und Kohlendioxid.

Gemäß einer weiteren Ausgestaltung des Abgassystems ist die erste Stelle (gewünschte Meßwertaufnahme) direkt stromabwärts einer Komponente zur mindest teilweisen Umsetzung der Schadstoffe und der Sensor stromabwärts eines Schalldämpfers angeordnet. Die Meßwerterfassung direkt stromabwärts beispielsweise eines Katalysators ist dann erforderlich, wenn die Funktionalität des Katalysators überwacht werden soll. Um das Anspringverhalten derartiger Katalysatoren direkt nach Starten der Verbrennungsmaschine zu verbessern, werden derartige Katalysatoren möglichst nahe an der Verbrennungsmaschine angeordnet, um sehr schnell die notwendige Temperatur für eine katalytische Umsetzung zu erreichen. Die katalytische Reaktion führt zusätzlich zu einer Erhöhung der Abgastemperatur. Demzufolge weist das Abgas direkt stromabwärts des Katalysators oft im Betrieb eine Temperatur von ca. 1000°C auf. Erfindungsgemäß ist der Sensor stromabwärts eines Schalldämpfers angeordnet, wobei an dieser Stelle die maximalen Temperaturen des Abgases bei ca. 400 °C liegen. Die Zeitdifferenz, die das Abgas benötigt, um von der Komponente zur Umsetzung eines Schadstoffes bis zum Schalldämpfer zu strömen, wird von dem Zeitglied berücksichtigt.

Gemäß einem weiteren Ausführungsbeispiel ist die erste Stelle (gewünschte Meßwertaufnahme) in einer separaten Abgaszuströmungsleitung direkt stromabwärts der Verbrennungsmaschine und die zweite Stelle mit dem Sensor direkt stromaufwärts einer Komponente zur mindestens teilweisen Umsetzung der Schadstoffe angeordnet. Die separaten Abgaszuströmungsleitungen verbinden die einzelnen Brennräume der Verbrennungsmaschine mit der Abgasleitung. Die einzelnen Abgasströme werden auf diese Weise zusammengeführt und der mindestens einen Komponente zugeführt. Eine Meßwerterfassung an der ersten Stelle, also direkt stromabwärts der einzelnen Brennräume, würde eine Charakterisierung des Verbrennungsvorgangs in jedem einzelnen Brennraum ermöglichen. Jedoch treten an dieser Stelle besonders hohe Druckschwankungen auf, welche durch das Ausstoßen des Abgases aus den Brennräumen entsteht, wodurch ein Sensor an dieser Stelle besonderen dynamischen Belastungen ausgesetzt wäre. Die Positionierung des Sensors weiter stromabwärts reduziert die dynamische Belastung des Sensors, wobei das Zeitglied die erfaßten Meßwerte so bereitstellt, daß die gewünschten Rückschlüsse auf die Verbrennungsvorgänge gezogen werden können

Besonders vorteilhaft ist es, wenn die Diagnose-Einheit mit einer Steuerungseinheit der Verbrennungsmaschine verbunden ist. Auf diese Weise kann einer von der Diagnose-Einheit festgestellten mangelhaften Umsetzung eines Schadstoffs bzw. einer unvollständigen Verbrennung entgegengewirkt werden. Die Steuerungseinheit nimmt dabei beispielsweise Einfluß auf die Menge des zugeführten Kraftstoffs, die Zufuhr an Primär- und/oder Sekundärluft oder die Ventilsteuerung, welche das Ein- und Ausströmen des Kraftstoff-Luftgemischs bzw. des Abgases regelt.

Gemäß noch einem weiteren Ausführungsbeispiel ist die Temperatur des Abgases während des Betriebes des Abgassystems an der zweiten Stelle geringer als an der ersten Stelle. Demzufolge ist die zweite Stelle beispielsweise stromabwärts der ersten Stelle angeordnet, da die Temperatur mit zunehmender Entfernung von der Verbrennungsmaschine im allgemeinen sinkt. Außerdem besteht die Möglichkeit, daß die zweite Stelle stromaufwärts der ersten Stelle angeordnet ist, wenn zwischen der zweiten Stelle und der ersten Stelle die Temperatur des Abgases erhöht (zum Beispiel durch eine katalytische und exotherme Reaktion in einem Katalysator) oder die zweite Stelle aktiv gekühlt wird.

Gemäß einem weiteren Ausführungsbeispiel sind die Druckschwankungen währen des Betriebes des Abgassystems an der zweiten Stelle geringer als an der ersten Stelle. Derartige Druckschwankungen nehmen mit zunehmender Entfernung zur Verbrennungsmaschine ab, insbesondere hinter Komponenten des Abgassystems, welche beispielsweise eine Verwirbelung der Strömung zufolge haben, wie beispielsweise ein Schalldämpfer. Die Lebensdauer eines Sensors wird somit aufgrund der Positionierung an der zweiten Stelle erhöht.

Gemäß noch einem weiteren Ausführungsbeispiel ist in der Abgasleitung ein Meßwertaufnehmer zur Erfassung des Druckes angeordnet. Der Meßwertaufnehmer registriert die Druckschwankungen des pulsierenden Abgasstroms, der aufgrund der zeitlich verschobenen Verbrennung in den einzelnen Brennräumen der Verbrennungsmaschine entsteht. Auf diese Weise wird eine Zuordnung der gemessenen Druckschwankung zu dem Brennraum ermöglicht, der die Druckschwankung erzeugt hat.

Gemäß einem weiteren erfindungsgemäßen Gedanken wird ein Verfahren zur Bestimmung der Schadstoffkonzentration eines Abgases an einer ersten Stelle des Abgassystems einer Verbrennungskraftmaschine vorgeschlagen, wobei ein Sensor zur Bestimmung der Schadstoffkonzentration an einer zweiten Stelle angeordnet ist. Dieser Sensor erfaßt einen Meßwert, wobei dieser Meßwert an ein Zeitglied weitergeleitet wird. Das Zeitglied berücksichtigt die Zeitdifferenz zwischen einer Meßwerterfassung an der ersten und der zweiten Stelle und leitet den Meßwert an eine Diagnose-Einheit weiter. Dabei wird der Meßwert in zeitliche Korrelation mit anderen, nicht verzögert erfaßten Meßwerten gesetzt. Die Schadstoffkonzentration im Abgas ist insbesondere von dem verbrannten Kraftstoff/Luftgemisch abhängig. Die erfaßten Schadstoffkonzentrationen müssen für eine Auswertung mit dem entsprechenden Kraftstoff/Luftgemisch in Beziehung gesetzt werden. Die Zeitdifferenz zwischen der imaginären Meßwerterfassung an der ersten Stelle und der zweiten Stelle ist im wesentlichen von der Geschwindigkeit des Abgases im Abgassystem abhängig. Diese Geschwindigkeit ist nicht konstant, sondern beispielsweise von dem Fahrverhalten des Kraftfahrzeugführers abhängig.

Besonders vorteilhaft ist es, wenn das Zeitglied die Zeitdifferenz bestimmt, die eine Volumeneinheit des Abgases während des Betriebes des Abgassystems benötigt, um von der ersten Stelle zur zweiten Stelle zu strömen. Mit der bestimmten Zeitdifferenz werden die entsprechenden anderen Meßwerte identifiziert, welche mit dem erfaßten Meßwert des Sensors an der zweiten Stelle in Korrelation gesetzt werden.

Gemäß einer weiteren Ausgestaltung des Verfahrens wird die Zeitdifferenz mittels eines gespeicherten Datenmodells bestimmt. Das Datenmodell umfaßt beispielsweise charakteristische Meßwertverläufe aus Präferenz- oder Testläufen des Abgassystems, welche eine Beurteilung der im Betrieb des Abgassystems erfaßten Meßwerte ermöglicht. Weiterhin sind in diesem Datenmodell beispielsweise Grenzwerte und/oder einzuhaltende Toleranzen der Gesetze zur Schadstoffbegrenzung enthalten.

Besonders vorteilhaft ist es, wenn in dem Datenmodell Informationen über das Volumen des Abgassystems gespeichert sind. Derartige Informationen über die Abmaße des Abgassystems ermöglichen eine Interpretation der erfaßten Meßwerte. Somit kann beispielsweise mit Hilfe des Volumens des Abgassystems, der Temperatur des Abgases sowie des Abgasmassenstromes auf die Geschwindigkeit des Abgases und somit auf die Zeitdifferenz geschlossen werden. Im Hinblick auf die Bestimmung der Zeitdifferenz zwischen einer Meßwerterfassung an der ersten und der zweiten Stelle, ist insbesondere die Berücksichtigung des Betrages des Teilvolumens des Abgassystems zwischen diesen beiden Stellen im Datenmodell vorteilhaft.

Gemäß einer weiteren Ausgestaltung des Verfahrens sind in dem Datenmodell Informationen über das Betriebsverhalten von den im Abgassystem angeordneten Komponenten zur mindestens teilweisen Umsetzung der Schadstoffe gespeichert. So können beispielsweise zwischen der ersten und der zweiten Stelle derartige Komponenten angeordnet sein, wobei die Änderung der chemischen Zusammensetzung des Abgases durch diese Komponente anhand der Informationen im Datenmodell berücksichtigt wird.

Gemäß noch einer weiteren Ausgestaltung des Verfahrens wird der Abgasmassenstrom anhand einer in die Verbrennungskraftmaschinen geleiteten Menge des Brennstoff-Luft-Gemischs bestimmt. Die quantitativen Zusammenhänge zwischen Abgasmassenstrom und dem verbrannten Brennstoff-Luft-Gemisch sind bekannt. Der Abgasmassenstrom dient beispielsweise der Interpretation der gemessenen Schadstoffkonzentration.

Gemäß einer weiteren Ausgestaltung des Verfahrens wird die Abgastemperatur im Abgassystem erfaßt. Von besonderem Interesse ist in diesem Zusammenhang die Abgastemperatur zwischen der ersten und der zweiten Stelle, da diese Temperatur beispielsweise für eine Bestimmung der Geschwindigkeit des Abgasstromes zwischen diesen Stellen herangezogen wird. Tritt ein besonders großes Temperaturgefälle zwischen diesen zwei Stellen auf, ist es vorteilhaft, die Abgastemperatur an mehreren Positionen zwischen der ersten und der zweiten Stelle zu erfassen und gegebenenfalls einen Mittelwert zu bilden.

Besonders vorteilhaft ist es, wenn die Zeitdifferenz mindesten in Abhängigkeit des Abgasmassenstroms und/oder der Abgastemperatur bestimmt wird.

Gemäß einer weiteren Ausgestaltung des Verfahrens wird durch die Diagnose-Einheit das Betriebsverhalten von mindestens einer Komponente zur Umsetzung mindestens einer Schadstoffkomponente überwacht. Zu diesem Zweck können beispielsweise die erfaßten Meßwertverläufe mit gespeicherten Meßwertverläufen von funktionstüchtigen Komponenten verglichen werden. Insbesondere die Meßwerte direkt nach dem Starten der Verbrennungsmaschine zeigen einen charakteristischen Verlauf (Anspringverhalten), der für die Überwachung der mindestens einen Komponente zur Umsetzung einer Schadstoffkomponente geeignet ist.

Gemäß einer weiteren Ausgestaltung des Verfahrens wird die Diagnose-Einheit zur Überwachung des Betriebsverhaltens der Verbrennungsmaschine verwendet. Eine fehlerhafte und unvollständige Verbrennung des Kraftstoffes kann auf diese Weise verhindert werden.

Gemäß einem weiteren Ausführungsbeispiel werden die einzelnen Brennräume der Verbrennungskraftmaschinen überwacht. Eine selektive Überwachung der einzelnen Brennräume unterstützt gegebenenfalls die Lokalisierung der Fehlerursache bei ansteigender Schadstoffkonzentration im Abgas.

Gemäß noch einer weiteren Ausgestaltung des Verfahrens wird an der zweiten Stelle zusätzlich von einem Meßwertaufnehmer der Druck im Abgassystem erfaßt, wobei die Bestimmung der Zeitdifferenz in Abhängigkeit des erfaßten Druckes erfolgt. Auftretende Druckschwankungen im Abgassystem haben im wesentlichen ihren Ursprung in den Verbrennungsvorgängen des Brennstoff-Luft-Gemisches in den einzelnen Brennräumen. Mit Hilfe dieser Druckschwankungen und der bestimmten Zeitdifferenz lassen sich demzufolge erhöhte Schadstoffkonzentrationen mit fehlerhaften oder unvollständigen Verbrennungsvorgängen in einem separaten Brennraum der Verbrennungsmaschine in Verbindung bringen.

Besonders vorteilhaft ist es, wenn die Diagnose-Einheit Daten an eine Steuerungsvorrichtung der Verbrennungsmaschine sendet, welche das Betriebsverhalten der Verbrennungsmaschine in Abhängigkeit der empfangenen Daten beeinflußt. Auf diese Weise kann einer erhöhten Schadstoffkonzentrationen im Abgas durch ein angepaßtes Betriebsverhalten der Verbrennungsmaschine entgegengewirkt werden.

Weitere Einzelheiten des erfindungs gemäßen Abgassystems werden anhand der in den Zeichnungen dargestellten, besonders bevorzugten Ausführungsbeispiele erläutert.

Es zeigen:
- Fig.1:: Eine schematische Darstellung des erfindungsgemäßen Abgassystems;
- Fig.2:: eine weitere Ausführungsform des erfindungsgemäßen Abgassystems und
- Fig.3:: ein Ablaufschema einer Ausgestaltung des erfindungsgemäßen Verfahrens zum Betrieb des Abgassystems.

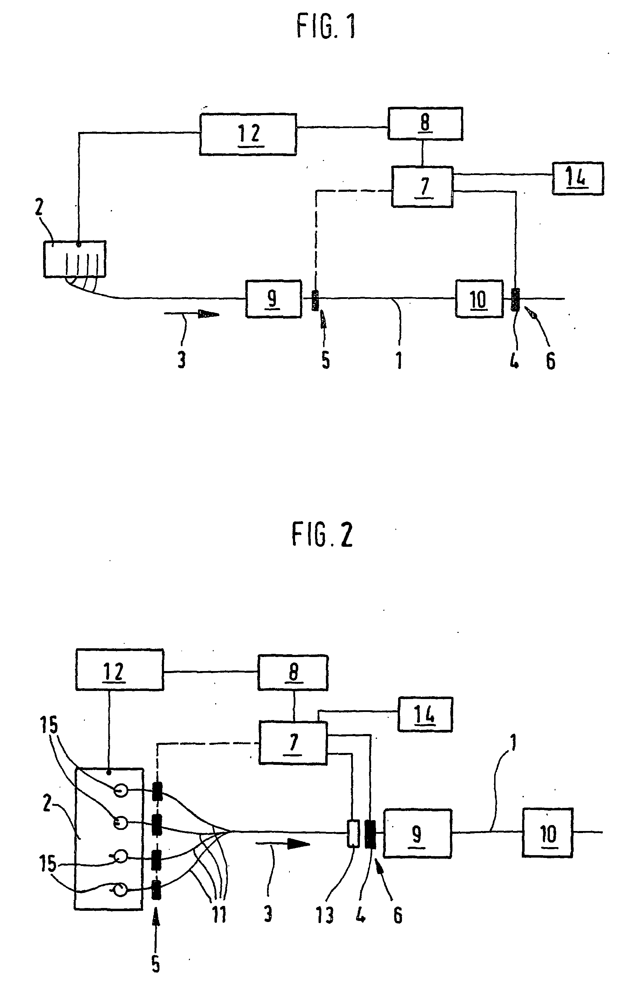

Fig. 1 zeigt schematisch den Aufbau eines erfindungsgemäßen Abgassystems zum Reinigen eines Abgases. Das dargestellte Abgassystem bezieht sich auf ein Abgassystem eines Kraftfahrzeuges. Die Verbrennungsmaschine 2 erzeugt während des Betriebes ein Abgas, welches in einer Abgasleitung 1 stromabwärts 3 in die Umgebung geführt wird. Das dargestellte Abgassystem weist eine Komponente 9 zur Umsetzung mindestens eines Schadstoffes (Kohlenmonoxid, Kohlenwasserstoff, Stickoxid) auf. Dieser Komponente 9 ist ein Schalldämpfer 10 stromabwärts 3 nachgeschaltet, welcher die Geräuschbildung des Abgassystems reduziert.

In dem dargestellten Ausführungsbeispiel ist die Konzentration eines Schadstoffes an der ersten Stelle 5 von Interesse. Der Einsatz eines Gassensors an dieser ersten Stelle 5 ist aufgrund der hohen Temperaturen direkt hinter einem Katalysator 9 nicht möglich. Der Katalysator 9 setzt die Schadstoffe im Abgas katalytisch um, wobei exotherme chemische Reaktion stattfinden, welche die Temperatur des Abgases erhöhen. Erfindungsgemäß ist der Sensor 4 in einer zweiten Stelle 6 stromabwärts 3 des Schalldämpfers 10 angeordnet. Die erfaßten Meßwerte des Sensors 4 werden an ein Zeitglied 7 gesendet.

Das Zeitglied 7 berücksichtigt die Zeitdifferenz, welche das Abgas benötigt, um von der ersten Stelle 5 zur zweiten Stelle 6 zu strömen. Diese Zeitdifferenz wird mit Informationen aus dem Datenmodell 14 bestimmt. Der erfaßte Meßwert wird somit korrelierend mit anderen, nicht verzögert erfaßten Meßwerten an eine Diagnose-Einheit 8 weitergeleitet.

Die Diagnose-Einheit 8 ist mit einer Steuerungsvorrichtung 12 der Verbrennungsmaschine 2 verbunden. Treten beispielsweise an der zweiten Stelle 6 erhöhte Schadstoffkonzentrationen auf, werden diese Informationen der Steuerungsvorrichtung 12 zugeführt, wobei die Steuerungsvorrichtung 12 das Betriebsverhalten der Verbrennungsmaschine 2 beeinflußt, um der erhöhten Schadstoffkonzentration entgegenzuwirken. Auf diese Weise kann das Betriebsverhalten der Verbrennungsmaschine bei auch mit temperatur- oder druckempfindlichen Sensoren 4 geregelt werden.

Fig. 2 zeigt ein weiteres Ausführungsbeispiel eines erfindungsgemäßen Abgassystems. Die Verbrennungsmaschine 2 weist mehrere Brennräume 15 auf, in denen die Verbrennung des Kraftstoff-Luft-Gemischs stattfindet. Das dort erzeugte Abgas wird über separate Abgaszuströmungsleitungen 11 zu einer Abgasleitung 1 zusammengeführt. Das Abgas wird stromabwärts 3 durch einen Katalysator 9 und einen Schalldämpfer 10 in die Umgebung geleitet.

Die Position der gewünschten Meßwerterfassung (erste Stelle 5) ist bei diesem Ausführungsbeispiel in den separaten Abgangszuströmungsleitungen 11 angeordnet. Aufgrund der dort herrschenden Temperatur- und Druckverhältnisse können beispielsweise bekannte Gassensoren an dieser Stelle nicht eingesetzt werden.

Erfindungsgemäß wird ein Sensor 4 stromabwärts 3 an einer zweiten Stelle 6 angeordnet, wobei der vom Sensor 4 erfaßte Meßwert an ein Zeitglied 7 weitergeleitet wird. Mit den Informationen aus einem Datenmodell 14 und/oder einem zusätzlichen Meßwertaufnehmer 13, welcher den Druck in der Abgasleitung 1 an der Stelle 6 erfaßt, wird die Zeitdifferenz zwischen der imaginären Meßwerterfassung an der ersten Stelle 5 und der tatsächlichen Meßwerterfassung an der Stelle 6 bestimmt. Der durch den Sensor 4 erfaßte Meßwert wird von dem Zeitglied 7 korrelierend mit anderen Meßwerten an die Diagnose-Einheit 8 weitergeleitet. Über eine Steuerungsvorrichtung 12 der Verbrennungsmaschine 2 ist durch die Diagnose-Einheit eine gezielte Regelung der Verbrennungsvorgänge in den Brennräumen 15 möglich.

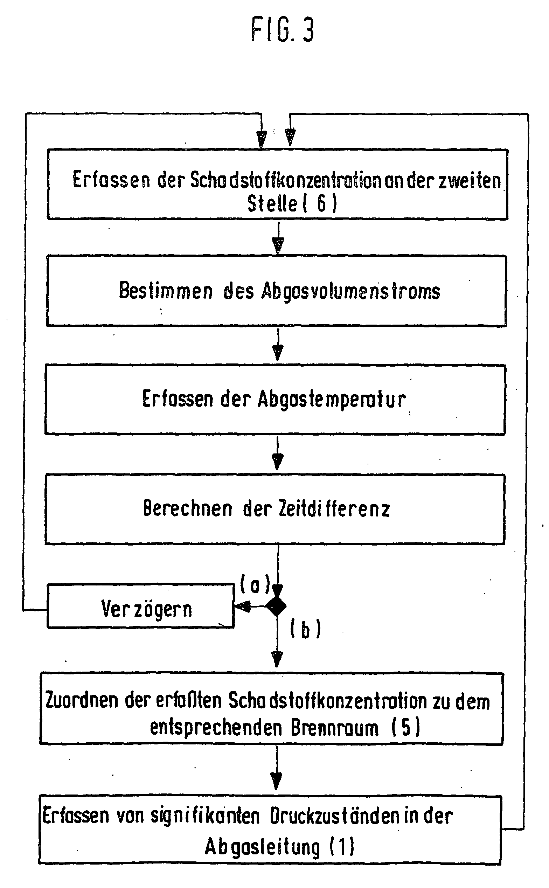

Fig. 3 zeigt ein Ablaufschema einer Ausgestaltung des erfindungsgemäßen Verfahrens zum Reinigen eines Abgases. Ausgehend von der Erfassung der Schadstoffkonzentration an der zweiten Stelle 6, wird der Abgasmassenstrom bestimmt. Dazu werden insbesondere Informationen über das verbrannte Brennstoff-Luft-Gemisch verwendet. Anschließend wird die Abgastemperatur zwischen der ersten Stelle 5 und der zweiten Stelle 6 erfaßt. Diese Daten, gegebenenfalls in Kombination mit weiteren Informationen des Datenmodells, ermöglichen die Berechnung der Zeitdifferenz, die das Abgas benötigt, um von der ersten Stelle 5 zur zweiten Stelle 6 zu strömen.

Die Berechnung der Zeitdifferenz erfolgt beispielsweise in vorgebbaren Zeitintervallen. Wird mit dem erfindungsgemäßen Verfahren beispielsweise die Funktion eines Katalysators 9 überwacht, genügt ein kurzes Verzögern (a), bis erneut mit der Erfassung der Schadstoffkonzentration an der zweiten Stelle 6 begonnen wird. Erfolgt eine Überwachung der Verbrennungsvorgänge in den Brennräumen 15, werden die erfaßten Schadstoffkonzentrationen nach der Berechnung der Zeitdifferenz zu den entsprechenden Brennräumen 15 zugeordnet. Der Zyklus zur Erfassung der Schadstoffkonzentration wird in diesem Fall beispielsweise durch signifikante Druckzustände in der Abgasleitung 1 ausgelöst (b). Zu diesem Zweck ist das Abgassystem mit einem Meßwertaufnehmer 13 ausgeführt.

Mit dieser Vorrichtung bzw. dem Verfahren zur Bestimmung der Schadstoffkonzentration eines Abgases können empfindliche Gassensoren an kühleren und vibrationsärmeren Stellen des Abgassystems angeordnet werden und dennoch Informationen über heißere und druckbelastete Stellen des Abgassystems gewonnen werden.

### Bezugszeichenliste

- 1: Abgasleitung
- 2: Verbrennungsmaschine
- 3: stromabwärts (Pfeilrichtung)
- 4: Sensor
- 5: erste Stelle
- 6: zweite Stelle
- 7: Zeitglied
- 8: Diagnose-Einheit
- 9: Komponente
- 10: Schalldämpfer
- 11: Zuströmungsleitung
- 12: Steuerungseinheit
- 13: Meßwertaufnehmer
- 14: Datenmodell
- 15: Brennraum

## Patentansprüche

1. Abgassystem zum Reinigen eines Abgases, mit einer Abgasleitung (1), welche das Abgas von einer Verbrennungsmaschine (2) stromabwärts (3) in die Umgebung führt, wobei die Abgasleitung (1) einen Sensor (4) aufweist, um die Schadstoffkonzentration an einer ersten Stelle (5) zu bestimmen, **dadurch gekennzeichnet, daß** der Sensor (4) an einer zweiten Stelle (6) angeordnet und mit einem Zeitglied (7) verbunden ist, welches die Zeitdifferenz zwischen einer Meßwerterfassung an der ersten (5) und der zweiten Stelle (6) berücksichtigt und den erfaßten Meßwert korrelierend mit anderen, nicht verzögerten, Meßwerten an eine Diagnose-Einheit (8) weiterleitet.

2. Abgassystem nach Anspruch 1, **dadurch gekennzeichnet, daß** der Sensor (4) ein Gassensor ist.

3. Abgassystem nach Anspruch 2, **dadurch gekennzeichnet, daß** der Sensor (4) für die Erfassung der Stickoxid-Konzentration im Abgas geeignet ist.

4. Abgassystem nach Anspruch 2, **dadurch gekennzeichnet**, das der Sensor (4) für die Erfassung der Kohlenwasserstoff-Konzentration geeignet ist.

5. Abgassystem nach einem der Ansprüche 1 bis 4, **dadurch gekennzeichnet, daß** während des Betriebes des Abgassystems die Temperatur des Abgases an der zweiten Stelle (6) geringer ist als an der ersten Stelle (5) ist.

6. Abgassystem nach einem der Ansprüche 1 bis 5, **dadurch gekennzeichnet, daß** während des Betriebes des Abgassystems die Druckschwankungen des Abgases an der zweiten Stelle (6) geringer sind als an der ersten Stelle (5).

7. Abgassystem nach einem der Ansprüche 1 bis 6, **dadurch gekennzeichnet, daß** das Abgassystem mindestens eine Komponente (9) zur mindestens teilweisen Umsetzung der Schadstoffe, insbesondere einen Katalysator, aufweist.

8. Abgassystem nach Anspruch 7, **dadurch gekennzeichnet, daß** die erste Stelle (5) direkt stromabwärts (3) der Komponente (9) und der Sensor (4) stromabwärts (3) eines Schalldämpfers (10) angeordnet ist.

9. Abgassystem nach einem der Ansprüche 1 bis 8, **dadurch gekennzeichnet, daß** die erste Stelle (5) in einer separaten Abgaszustömungsleitung (11) direkt stromabwärts (3) der Verbrennungsmaschine (2) und die zweite Stelle (6) direkt stromaufwärts einer Komponente (9) zur mindestens teilweisen Umsetzung der Schadstoffe angeordnet ist.

10. Abgassystem nach einem der Ansprüche 1 bis 9, **dadurch gekennzeichnet, daß** die Diagnose-Einheit (8) mit einer Steuerungseinheit (12) der Verbrennungsmaschine (2) verbunden ist.

11. Abgassystem nach einem der Ansprüche 1 bis 10, **dadurch gekennzeichnet, daß** in der Abgasleitung (1) ein Meßwertaufnehmer (13) zur Erfassung des Druckes angeordnet ist.

12. Verfahren zur Bestimmung der Schadstoffkonzentration eines Abgases an einer ersten Stelle (5) eines Abgassystems einer Verbrennungskraftmaschine (2), wobei ein Sensor (4) zur Bestimmung der Schadstoffkonzentration an einer zweiten Stelle (6) angeordnet ist und einen Meßwert erfaßt, wobei dieser Meßwert an ein Zeitglied (7) weitergeleitet wird, und das Zeitglied (7) die Zeitdifferenz zwischen einer Meßwerterfassung an der ersten (5) und der zweiten Stelle (6) berücksichtigt und den Meßwert an eine Diagnose-Einheit (8) weiterleitet, wobei dieser Meßwert in zeitliche Korrelation mit anderen, nicht verzögerten, Meßwerten gesetzt wird.

13. Verfahren nach Anspruch 12, **dadurch gekennzeichnet, daß** das Zeitglied (7) die Zeitdifferenz bestimmt, die eine Volumeneinheit des Abgases während des Betriebes des Abgassystems benötigt, um von der ersten Stelle (5) zur zweiten Stelle (6) zu strömen.

14. Verfahren nach Anspruch 12 oder 13, **dadurch gekennzeichnet, daß** die Zeitdifferenz mittels eines gespeicherten Datenmodells (14) bestimmt wird.

15. Verfahren nach Anspruch 14, **dadurch gekennzeichnet, daß** in dem Datenmodell (14) Informationen über das Volumen des Abgassystems gespeichert sind.

16. Verfahren nach Anspruch 14 oder 15, **dadurch gekennzeichnet, daß** in dem Datenmodell (14) Informationen über das Betriebsverhalten von im Abgassystem angeordneten Komponenten (9) zur mindestens teilweisen Umsetzung der Schadstoffe gespeichert sind.

17. Verfahren nach einem der Ansprüche 12 bis 16, **dadurch gekennzeichnet, daß** der Abgasmassenstrom anhand einer in die Verbrennungskraftmaschine (2) geleiteten Menge des Brennstoff-Luft-Gemisches bestimmt wird.

18. Verfahren nach einem der Ansprüche 12 bis 17, **dadurch gekennzeichnet, daß** die Abgastemperatur erfaßt wird.

19. Verfahren nach Anspruch 17 oder 18, **dadurch gekennzeichnet, daß** die Zeitdifferenz zumindest in Abhängigkeit des bestimmten Abgasmassenstroms und/oder der Abgastemperatur bestimmt wird.

20. Verfahren nach Anspruch 16, **dadurch gekennzeichnet, daß** durch die Diagnose-Einheit (8) das Betreibsverhalten von mindestens einer Komponente (9) zur Umsetzung mindestens einer Schadstoffkomponente überwacht wird.

21. Verfahren nach einem der Ansprüche 12 bis 20, **dadurch gekennzeichnet, daß** die Diagnose-Einheit (8) zur Überwachung des Betriebsverhaltens der Verbrennungsmaschine (2) verwendet wird.

22. Verfahren nach Anspruch 21, **dadurch gekennzeichnet, daß** die einzelnen Brennräume (15) der Verbrennungskraftmaschine (2) überwacht werden.

23. Verfahren nach Anspruch 22, **dadurch gekennzeichnet, daß** zusätzlich an der zweiten Stelle (6) von einem Meßwertaufnehmer (13) der Druck im Abgassystem erfaßt wird, wobei die Bestimmung der Zeitdifferenz in Abhängigkeit des erfaßten Druckes erfolgt.

24. Verfahren nach einem der Ansprüche 12 bis 23, **dadurch gekennzeichnet, daß** die Diagnose-Einheit (8) Daten an eine Steuerungsvorrichtung (12) der Verbrennungsmaschine (2) sendet, welche das Betriebsverhalten der Verbrennungsmaschine (2) in Abhängigkeit der empfangenen Daten beeinflußt.

## Claims

1. Exhaust system for purifying an exhaust gas, with an exhaust pipe (1), which conducts the exhaust gas from an internal combustion engine (2) downstream (3) into the environment, whereby the exhaust pipe (1) has a sensor (4) for determining the pollutant concentration at a first position (5), **characterised in that** the sensor (4) is arranged at a second position (6) and connected to a time function element (7), which takes into account the time difference between a measured value recording at the first (5) and the second position (6) and transmits the recorded measured value correlated with other undelayed measured values to a diagnosis unit

2. Exhaust system according to claim 1, **characterised in that** the sensor (4) is a gas sensor.

3. Exhaust system according to claim 2, **characterised in that** the sensor (4) is suitable for detecting the nitrogen oxide concentration in the exhaust gas.

4. Exhaust system according to claim 2, **characterised in that** the sensor (4) is suitable for detecting the hydrocarbon concentration.

5. Exhaust system according to one of claims 1 to 4, **characterised in that** during operation of the exhaust system the temperature of the exhaust gas is lower at the second position (6) that at the first position (5).

6. Exhaust system according to one of claims 1 to 5, **characterised in that** during operation of the exhaust system the exhaust gas pressure fluctuations are lower at the second position (6) than at the first position (5).

7. Exhaust system according to one of claims 1 to 6, **characterised in that** the exhaust system has at least one component (9), in particular a catalytic converter, for at least partially converting the pollutants.

8. Exhaust system according to claim 7, **characterised in that** the first position (5) is arranged directly downstream (3) of component (9) and the sensor (4) is arranged downstream (3) of a silencer (10).

9. Exhaust system according to one of claims 1 to 8, **characterised in that** the first position (5) is arranged in a separate exhaust gas inflow line (11) directly downstream (3) of the internal combustion engine (2) and the second position (6) is arranged directly upstream of a component (9) for at least partially converting the pollutants.

10. Exhaust system according to one of claims 1 to 9, **characterised in that** the diagnosis unit (8) is connected to a control unit (12) of the internal combustion engine (2).

11. Exhaust system according to one of claims 1 to 10, **characterised in that** a measured value pick-up (13) is arranged in the exhaust pipe (1) for detecting the pressure.

12. Process for determining the pollutant concentration in an exhaust gas at a first position (5) of an exhaust system of an internal combustion engine (2), wherein a sensor (4) is arranged at a second position (6) for determining the pollutant concentration and detects a measured value, wherein this measured value is transmitted to a time function element (7), and the time function element (7) takes into account the time difference between a recorded measured value at the first (5) and the second position (6) and transmits the measured value to a diagnosis unit (8), wherein this measured value is correlated with other, undelayed, measured values.

13. Process according to claim 12, **characterised in that** the time function element (7) determines the time difference required by a unit volume of the exhaust gas during operation of the exhaust system to flow from the first position (5) to the second position (6).

14. Process according to claim 12 or 13, **characterised in that** the time difference is determined by means of a stored data model (14).

15. Process according to claim 14, **characterised in that** information about the volume of the exhaust system is stored in the data model (14).

16. Process according to claim 14 or 15, **characterised in that** information about the operation performance of components (9) for at least partially converting the pollutants arranged in the exhaust system are stored in the data model (14).

17. Process according to one of claims 12 to 16, **characterised in that** the exhaust gas mass flow is determined on the basis of a quantity of the fuel-air mixture conducted into the internal combustion engine (2).

18. Process according to one of claims 12 to 17, **characterised in that** the exhaust gas temperature is detected.

19. Process according to claim 17 or 18, **characterised in that** the time difference is determined at least as a function of the determined exhaust gas mass flow and/or the exhaust gas temperature.

20. Process according to claim 16, **characterised in that** the operating performance of at least one component (9) for converting at least one pollutant is monitored using the diagnosis unit (8).

21. Process according to one of claims 12 to 20, **characterised in that** the diagnosis unit (8) is used for monitoring the operating performance of the internal combustion engine (2).

22. Process according to claim 21, **characterised in that** the individual combustion chambers (15) of the internal combustion engine (2) are monitored.

23. Process according to claim 22, **characterised in that** additionally at the second position (6) the pressure in the exhaust system is recorded by a measured value pick-up (13), wherein the determination of the time difference occurs as a function of the recorded pressure.

24. Process according to one of claims 12 to 23, **characterised in that** the diagnosis unit (8) sends data to a control device (12) of the internal combustion engine (2), which influences the operating performance of the internal combustion engine (2) as a function of the received data.

## Revendications

1. Système de gaz d'échappement pour purifier un gaz d'échappement, avec une conduite de gaz d'échappement (1) qui guide en aval (3) le gaz d'échappement d'une machine à combustion interne (2) jusque dans l'environnement, dans quel cas la conduite de gaz d'échappement (1) a un capteur (4) pour déterminer la concentration de polluants à une première position (5), **caractérisé en ce que** le capteur (4) est agencé à une deuxième position (6) et est relié à un élément de temporisation (7) qui tient compte de la différence de temps entre une détection d'une valeur mesurée à la première (5) et à la deuxième position (6) et qui transmet la valeur mesurée détectée en corrélation avec d'autres valeurs mesurées, non différées à une unité de diagnose (8).

2. Système de gaz d'échappement selon la revendication 1, **caractérisé en ce que** le capteur (4) est un capteur de gaz.

3. Système de gaz d'échappement selon la revendication 2, **caractérisé en ce que** le capteur (4) est approprié à détecter la concentration d'oxyde d'azote dans le gaz d'échappement.

4. Système de gaz d'échappement selon la revendication 2, **caractérisé en ce que** le capteur (4) est approprié à détecter la concentration d'hydrocarbures.

5. Système de gaz d'échappement selon l'une des revendications 1 à 4, **caractérisé en ce que** pendant l'opération du système de gaz d'échappement la température du gaz d'échappement est plus basse à la deuxième position (6) qu'à la première position (5).

6. Système de gaz d'échappement selon l'une des revendications 1 à 5, **caractérisé en ce que** pendant l'opération du système de gaz d'échappement les fluctuations de pression du gaz d'échappement sont plus basses à la deuxième position (6) qu'à la première position (5).

7. Système de gaz d'échappement selon l'une des revendications 1 à 6, **caractérisé en ce que** le système de gaz d'échappement a au moins une composante (9), notamment un catalyseur, pour transformer au moins partiellement les polluants.

8. Système de gaz d'échappement selon la revendication 7, **caractérisé en ce que** la première position (5) est agencée directement en aval (3) de la composante (9) et le capteur (4) en aval (3) d'un silencieux (10).

9. Système de gaz d'échappement selon l'une des revendications 1 à 8, **caractérisé en ce que** la première position (5) est agencée dans une conduite d'afflux de gaz d'échappement séparée (11) directement en aval (3) de la machine à combustion interne (2) et la deuxième position (6) est agencée directement en amont d'une composante (9) pour transformer au moins partiellement les polluants.

10. Système de gaz d'échappement selon l'une des revendications 1 à 9, **caractérisé en ce que** l'unité de diagnose (8) est reliée à une unité de commande (12) de la machine à combustion interne (2).

11. Système de gaz d'échappement selon l'une des revendications 1 à 10, **caractérisé en ce qu'**un transducteur (13) est agencé dans la conduite de gaz d'échappement (1) pour détecter la pression.

12. Procédé pour déterminer la concentration de polluants d'un gaz d'échappement à une première position (5) d'un système de gaz d'échappement d'une machine à combustion interne (2), dans quel cas un capteur (4) est agencé à une deuxième position (6) pour déterminer la concentration de polluants et détecte une valeur mesurée, cette valeur mesurée étant transmise à un élément de temporisation (7), et l'élément de temporisation (7) tient compte de la différence de temps entre une détection de valeur mesurée à la première (5) et à la deuxième position (6) et transmet la valeur mesurée à une unité de diagnose (8), cette valeur mesurée étant mise en corrélation temporisée avec d'autres valeurs mesurées non différées.

13. Procédé selon la revendication 12, **caractérisé en ce que** l'élément de temporisation (7) détermine la différence de temps nécessitée par une unité de volume du gaz d'échappement durant l'opération du système de gaz d'échappement pour s'écouler de la première position (5) jusqu'à la deuxième position (6).

14. Procédé selon la revendication 12 ou 13, **caractérisé en ce que** la différence de temps est déterminée à l'aide d'un modèle mémorisé de données (14).

15. Procédé selon la revendication 14, **caractérisé en ce que** des informations sur le volume du système de gaz d'échappement sont mémorisées dans le modèle de données (14).

16. Procédé selon la revendication 14 ou 15, **caractérisé en ce que** des informations sur le comportement opérationnel de composantes (9) pour transformer au moins partiellement les polluants et agencées dans le système de gaz d'échappement sont mémorisées dans le modèle de données (14).

17. Procédé selon l'une des revendications 12 à 16, **caractérisé en ce que** le flux de masse de gaz d'échappement est déterminé au moyen d'une quantité du mélange carburant-air introduite dans la machine à combustion interne (2).

18. Procédé selon l'une des revendications 12 à 17, **caractérisé en ce que** la température de gaz d'échappement est détectée.

19. Procédé selon la revendication 17 ou 18, **caractérisé en ce que** la différence de temps est déterminée au moins en fonction du flux de masse de gaz d'échappement déterminé et/ou en fonction de la température de gaz d'échappement.

20. Procédé selon la revendication 16 **caractérisé en ce que** le comportement opérationnel d'au moins une composante (9) pour transformer au moins une composante de polluant est contrôlé par l'unité de diagnose (8).

21. Procédé selon l'une des revendications 12 à 20, **caractérisé en ce que** l'unité de diagnose (8) est utilisée pour contrôler le comportement opérationnel de la machine à combustion interne (2).

22. Procédé selon la revendication 21, **caractérisé en ce que** les chambres individuelles de combustion (15) de la machine à combustion interne (2) sont contrôlées.

23. Procédé selon la revendication 22, **caractérisé en ce qu'**en outre à la deuxième position (6) la pression dans le système de gaz d'échappement est détectée par un transducteur (13), la détermination de la différence de temps étant effectuée en fonction de la pression détectée.

24. Procédé selon l'une des revendications 12 à 23, **caractérisé en ce que** l'unité de diagnose (8) envoie des données à un dispositif de commande (12) de la machine à combustion interne (2), lequel dispositif de commande (12) influence le comportement opérationnel de la machine à combustion interne (2) en fonction des données reçues.
